# EUROPÄISCHE PATENTSCHRIFT

(11) **EP 3 883 122 B1**
(45) Veröffentlichungstag und Bekanntmachung des Hinweises auf die Patenterteilung: **03.01.2024**
(21) Anmeldenummer: 21159222.5
(22) Anmeldetag: 25.02.2021
(51) Int. Cl.: H02P 21/04, H02P 6/18, H02P 1/52, H02P 6/20, H02P 21/18, H02P 21/34

(54) **HAUSHALTSGERÄT UND VERFAHREN ZUM BETREIBEN EINES HAUSHALTSGERÄTES**
DOMESTIC APPLIANCE AND METHOD FOR OPERATING SAME
APPAREIL ÉLECTROMÉNAGER ET PROCÉDÉ DE FONCTIONNEMENT D'UN APPAREIL ÉLECTROMÉNAGER

(30) Priorität: 18.03.2020 DE 102020203489
(43) Veröffentlichungstag der Anmeldung: 22.09.2021
(73) Patentinhaber: BSH Hausgeräte GmbH, 81739 München (DE)
(72) Erfinder: Hoser, Markus, 89344 Aislingen (DE); Klein, Moritz, 89537 Giengen (DE); Mayer, Roman, 86666 Burgheim (DE); Paulduro, Achim, 89129 Langenau (DE)

(56) Entgegenhaltungen:
- EP-A1- 2 892 148
- EP-A1- 3 288 175
- CN-A- 102 647 145
- DE-A1-102016 204 674
- US-A1- 2015 084 575
- US-A1- 2015 381 090

## Beschreibung

Die Erfindung betrifft ein Verfahren zum Betreiben eines Haushaltsgerätes, das einen feldorientiert geregelten elektrischen Antrieb umfasst, und ein entsprechendes Haushaltsgerät.

Die DE 10 2017 211 217 A1 offenbart ein Haushaltskältegerät, das einen Kältemittelkreislauf mit einem Verdichter und einen drehzahlgeregelten elektrischen Antrieb aufweist. Die Reglung des elektrischen Antriebs ist eine feldorientierte Regelung und der elektrische Antrieb umfasst einen Umrichter und einen dem Umrichter nachgeschalteten permanenterregten Drehstromsynchronmotor, der Teil des Verdichters ist oder vorgesehen ist, den Verdichter anzutreiben. Für ein Anfahren des Verdichters aus einer Standphase in eine Kühlphase wird ausgehend vom Stillstand des Verdichters, der Drehstromsynchronmotor mit einer Anfahr-Soll-Drehzahl, die maximal 5% der der Kühlphase zugeordneten Soll-Drehzahl ist, bewegt, bis ein Kolben des Verdichters über den oberen Totpunkt des Verdichters bewegt wird. Anschließend wird der Drehstromsynchronmotor derart bewegt, dass sich dessen Rotor für die Kühlphase mit der der Kühlphase zugeordneten Soll-Drehzahl dreht.

Die DE 10 2008 029 910 A1 offenbart eine Haushaltsgeschirrspülmaschine, die eine Pumpe und einen feldorientiert geregelten elektrischen Antrieb aufweist. Der elektrische Antrieb umfasst einen Umrichter und einen dem Umrichter nachgeschalteten permanenterregten Drehstromsynchronmotor, der die Pumpe antreibt.

Beispielsweise aus der DE 10 2016 210 443 A1 oder der DE 10 2017 213 069 A1 ist es bekannt, der Versorgungsspannung eines Drehstromsynchronmotors eine hochfrequente Spannung zu überlagern, welche einen entsprechenden, überlagerten hochfrequenten Anteil der Strangströme des Drehstrommotors bewirkt., um die Winkelposition des Rotors relativ zum Stator des Drehstrommotors zu bestimmen.

Die CN 102 647145 A offenbart ein Verfahren zur Steuerung eines Kältegeräts mit einem Gleichstrom (DC)-Motor mit Frequenzumrichter. Für zwei Drehzahlbereiche werden Positionsschätzmethoden für eine Rotorposition angegeben.

Die US 2015/084575 A1 beschreibt eine Motorreglerarchitektur mit einer Motorsteuerung, die eine Funktion zur Abschätzung des niedrigen Drehzahlbetriebs des Motors durch Auswertung der Antwort auf ein in den Regelkreis der Reglerarchitektur injiziertes periodisches Erregersignal beinhaltet.

Aus der US 2015/381090 A1 ist ein Verfahren zur Bestimmung elektrischer Winkel von Elektromotoren bei Null- und niedrigen Drehzahlen ohne Verwendung von Winkelsensoren bekannt.

Die EP 3 288175 A1 stellt ein Verfahren zur adaptiven sensorlosen Positionsbestimmung eines PMSM Motors vor, wobei zwischen Rotorpositionsbestimmung mittels kontinuierlicher Signalinjektion und Rotorpositionsbestimmung mittels Gegen-EMK mittels einer Motorsteuerung in Abhängigkeit von der Drehzahl umgeschaltet wird.

Aufgabe der Erfindung ist es, ein verbessertes Verfahren zum Betreiben eines Haushaltsgerätes anzugeben, das einen drehzahlgeregelten elektrischen Antrieb aufweist, dessen Reglung eine feldorientierte Regelung und dessen Motor ein permanenterregten Drehstromsynchronmotor ist, der Teil einer Komponente des Haushaltsgerätes ist oder vorgesehen ist, diese Komponente anzutreiben.

Die Aufgabe der Erfindung wird gelöst durch ein Verfahren zum Betreiben eines Haushaltsgerätes, das eine Komponente und einen geregelten elektrischen Antrieb aufweist, der einen permanenterregten Drehstromsynchronmotor, ein insbesondere als Umrichter ausgebildetes Stellglied zum Ansteuern des Drehstromsynchronmotors und eine feldorientierte Regelung zum Ansteuern des Stellglieds aufweist, wobei der Drehstromsynchronmotor einen Stator und einen bezüglich des Stators drehbar gelagerten Rotor umfasst und Teil der Komponente ist oder vorgesehen ist, diese Komponente anzutreiben, aufweisend folgende Verfahrensschritte:
während einer Anlaufphase des elektrischen Antriebs,
- Überlagern einer von dem Stellglied erzeugten und zum Betreiben des Drehstromsynchronmotors vorgesehenen Versorgungsspannung mit einer hochfrequenten Spannung, wodurch Strangströme des Drehstromsynchronmotors entsprechende hochfrequente Stromanteile aufweisen,
- Ermitteln von dem Drehstromsynchronmotor zugeordnete Längs- und Querströme aus den Strangströmen, die der hochfrequenten Spannung entsprechende hochfrequente Stromanteile aufweisen,
- Ermitteln der Winkelposition des Rotors relativ zum Stator in Abhängigkeit der hochfrequenten Stromanteile der Längs- und Querströme,
- Erhöhen der Drehzahl des Drehstromsynchronmotors durch drehzahlgeregeltes Betreiben des geregelten elektrischen Antriebs mittels der feldorientierten Regelung und in Abhängigkeit der mittels der hochfrequenten Stromanteile der Längs- und Querströme ermittelten Winkelposition des Rotors relativ zum Stator bis der Drehstromsynchronmotor eine vorgegebene Grenzdrehzahl erreicht,
   wobei die feldorientierte Regelung (43) eine Kaskadenstruktur mit einem einen Stromregler (51, 52) aufweisenden innenliegenden Stromregelkreis, dem ein äußerer Drehzahlregelkreis überlagert ist, ausgebildet ist, aufweisend Erzeugen eines Ansteuersignals für das Stellglied durch Überlagern des vom Stromregler (52) erzeugten, der Versorgungspannung zugeordneten Signals mit einem der hochfrequenten Spannung zugeordneten Signal,
   wobei die feldorientierte Regelung (43) eine diskrete feldorientierte Regelung ist und aufweisend Betreiben des Stromreglers (52) mit einer Reglerfrequenz, die insbesondere gleich der Frequenz der hochfrequenten Spannung ist, und/oder wobei die hochfrequente Spannung rechteckförmig ausgebildet ist,
- dabei diskretes Messen der Längs- und Querströme zumindest während der Bremsphase mit der doppelten Frequenz der Frequenz der hochfrequenten Spannung, wobei die Messungen derart getaktet sind, dass bei zwei hintereinander erfolgen Messungen eine der Messungen beim Maximum und die andere Messung beim Minimum der gemessenen Ströme erfolgen, und
- Ermitteln der hochfrequenten Stromanteile der Längs- und Querströme durch Differenzbilden der gemessenen entsprechenden Ströme zweier hintereinander folgender Messungen,
und während einer der Anlaufphase anschließenden Betriebsphase, drehzahlgeregeltes Betreiben des geregelten elektrischen Antriebs mittels der feldorientierten Regelung und in Abhängigkeit einer mittels der Längs- und Querströme und eines mathematischen Modells des Drehstromsynchronmotors ermittelten Winkelposition des Rotors relativ zum Stator.

Ein weiterer Aspekt der Erfindung betrifft ein Haushaltsgerät, aufweisend eine Komponente und einen geregelten elektrischen Antrieb, der einen permanenterregten Drehstromsynchronmotor, ein insbesondere als Umrichter ausgebildetes Stellglied zum Ansteuern des Drehstromsynchronmotors und eine feldorientierte Regelung zum Ansteuern des Stellglieds aufweist, wobei der Drehstromsynchronmotor einen Stator und einen bezüglich des Stators drehbar gelagerten Rotor umfasst und Teil der Komponente ist oder vorgesehen ist, diese Komponente anzutreiben, und das Haushaltsgerät ausgebildet ist, das erfindungsgemäße Verfahren durchzuführen.

Das Haushaltsgerät ist damit ausgebildet, während einer Anlaufphase des elektrischen Antriebs,
- eine von dem Stellglied erzeugte und zum Betreiben des Drehstromsynchronmotors vorgesehene Versorgungsspannung mit einer hochfrequenten Spannung zu überlagern, wodurch Strangströme des Drehstromsynchronmotors entsprechende hochfrequente Stromanteile aufweisen,
- von dem Drehstromsynchronmotor zugeordnete Längs- und Querströme aus den Strangströmen zu ermitteln, die der hochfrequenten Spannung entsprechende hochfrequente Stromanteile aufweisen,
- die Winkelposition des Rotors relativ zum Stator in Abhängigkeit der hochfrequenten Stromanteile der Längs- und Querströme zu ermitteln, und
- die Drehzahl des Drehstromsynchronmotors durch drehzahlgeregeltes Betreiben des geregelten elektrischen Antriebs mittels der feldorientierten Regelung und in Abhängigkeit der mittels der hochfrequenten Stromanteile der Längs- und Querströme ermittelten Winkelposition des Rotors relativ zum Stator zu erhöhen, bis der Drehstromsynchronmotor eine vorgegebene Grenzdrehzahl erreicht,
   wobei die feldorientierte Regelung (43) eine Kaskadenstruktur mit einem einen Stromregler (51, 52) aufweisenden innenliegenden Stromregelkreis, dem ein äußerer Drehzahlregelkreis überlagert ist, ausgebildet ist, aufweisend Erzeugen eines Ansteuersignals für das Stellglied durch Überlagern des vom Stromregler (52) erzeugten, der Versorgungspannung zugeordneten Signals mit einem der hochfrequenten Spannung zugeordneten Signal,
   wobei die feldorientierte Regelung (43) eine diskrete feldorientierte Regelung ist und aufweisend Betreiben des Stromreglers (52) mit einer Reglerfrequenz, die insbesondere gleich der Frequenz der hochfrequenten Spannung ist, und/oder wobei die hochfrequente Spannung rechteckförmig ausgebildet ist,
- dabei diskretes Messen der Längs- und Querströme zumindest während der Bremsphase mit der doppelten Frequenz der Frequenz der hochfrequenten Spannung, wobei die Messungen derart getaktet sind, dass bei zwei hintereinander erfolgen Messungen eine der Messungen beim Maximum und die andere Messung beim Minimum der gemessenen Ströme erfolgen, und
- Ermitteln der hochfrequenten Stromanteile der Längs- und Querströme durch Differenzbilden der gemessenen entsprechenden Ströme zweier hintereinander folgender Messungen,
und während einer der Anlaufphase anschließenden Betriebsphase, den geregelten elektrischen Antrieb mittels der feldorientierte Regelung und in Abhängigkeit einer mittels der Längs- und Querströme und mathematischen Modells des Drehstromsynchronmotors ermittelten Winkelposition des Rotors relativ zum Stator drehzahlgeregelt zu betreiben.

Das Haushaltsgerät umfasst den geregelten elektrischen Antrieb, dessen Motor ein permanent erregter Drehstromsynchronmotor ist. Der permanenterregte Drehstromsynchronmotor ist z.B. ein bürstenloser Gleichstrommotor.

Der elektrische Antrieb umfasst außerdem das Stellglied, welches den Drehstromsynchronmotor ansteuert, d.h. den Drehstromsynchronmotor mit der Versorgungsspannung versorgt. Die Versorgungsspannung ist eine dreiphasige Spannung, deren Grundfrequenz durch die Drehzahlregelung und der gewünschten Soll-Drehzahl eingestellt wird.

Das Stellglied ist insbesondere ein Umrichter, der vorzugsweise mittels pulsweiten Modulation betrieben wird.

Die Regelung des geregelten elektrischen Antriebs steuert das Stellglied bzw. den Umrichter an und ist eine feldorientierte Regelung. Eine feldorientierte Regelung bildet üblicherweise eine Kaskadenstruktur mit innenliegenden Stromregelkreisen, denen ein äußerer Drehzahlregelkreis überlagert ist. Die feldorientierte Regelung umfasst somit insbesondere eine Kaskadenstruktur mit einem einen Stromregler aufweisenden innenliegenden Stromregelkreis, dem ein äußerer Drehzahlregelkreis überlagert ist. Der Stromregler ist insbesondere ein PI-Regler, also vorzugsweise ein Regler mit einem Proportional- und einem Integralanteil.

Die feldorientierte Regelung ist vorzugsweise eine diskrete bzw. digitale feldorientierte Regelung. Die Takt- bzw. Regelfrequenz der diskreten bzw. digitalen feldorientierten Regelung uns somit des Stromreglers ist vorzugsweise größer als 1kHz, z.B. 4kHz.

Für die feldorientierte Regelung ist es nötig, die Winkelposition des Rotors relativ zum Stator des Drehstromsynchronmotors zu kennen. Um die Winkelposition sensorlos bzw. ohne einen Geber zu ermitteln, kann die Winkelposition in Abhängigkeit der sogenannten und dem Fachmann im Prinzip bekannten Längs- und Querströme, die aus den Strangströmen des Drehstromsynchronmotor berechnet werden können, und einem mathematischen Modells des Drehstromsynchronmotors, das auch als Beobachter bezeichnet wird, ermitteln. Die Winkelposition des Rotors relativ zum Stator wird somit insbesondere sensorlos ermittelt.

Bei einer relativ geringen Drehzahl des Drehstromsynchronmotors kann es jedoch sein, dass ein Auswerten dieser Ströme kein zuverlässiges Ermitteln der Winkelposition des Rotors ermöglicht. Deshalb wird erfindungsgemäß während der Anlaufphase des elektrischen Antriebs insbesondere aus dem Stillstand die von dem Stellglied erzeugte und zum Betreiben des Drehstromsynchronmotors vorgesehene Versorgungsspannung mit der hochfrequenten Spannung überlagert, wodurch die Strangströme des Drehstromsynchronmotors entsprechende hochfrequente Stromanteile aufweisen. Dies wird im Englischen als "high frequncy injection (HFI)" bezeichnet. Dadurch weisen die Längs- und Querströme entsprechende hochfrequente Stromanteile auf. Aufgrund dieser hochfrequenten Stromanteile ist es dann möglich, auch bei relativ niedrigen Drehzahlen eine für die feldorientierte Regelung nötige Winkelposition des Rotors sensorlos zu ermitteln, und somit während der Anfahrphase die Drehzahl des Drehstromsynchronmotors durch drehzahlgeregeltes Betreiben des geregelten elektrischen Antriebs mittels der feldorientierten Regelung und in Abhängigkeit der mittels der hochfrequenten Stromanteile der Längs- und Querströme ermittelten Winkelposition des Rotors relativ zum Stator zu erhöhen, bis der Drehstromsynchronmotor die vorgegebene Grenzdrehzahl erreicht.

Aufgrund dieser hochfrequenten Stromanteile ist es ggf. sogar möglich, beim Stillstand des Drehstromsynchronmotors die Winkelposition des Rotors sensorlos zu ermitteln.

Die Grenzdrehzahl liegt vorzugsweise zwischen 600 und 1400 Umdrehungen pro Minute, insbesondere um 1000 Umdrehungen pro Minute.

Die hochfrequente Spannung und somit die hochfrequenten Stromanteile weisen vorzugsweise eine Frequenz von größer als 1 kHz, vorzugsweise von größer als 2 kHz auf.

Während der der Anlaufphase anschließenden Betriebsphase wird der geregelte elektrische Antrieb drehzahlgeregelt mittels der feldorientierten Regelung und in

Abhängigkeit einer mittels der Längs- und Querströme und des mathematischen Modells des Drehstromsynchronmotors ermittelten Winkelposition des Rotors relativ zum Stator betrieben, d.h. die Winkelposition des Rotors wird während der Betriebsphase in Abhängigkeit der den Drehstromsynchronmotor antreibenden Längs- und Querströme und des mathematischen Modells des Drehstromsynchronmotors ermittelt.

Vorzugsweise wird die vom Stellglied erzeugte und zum Betreiben des Drehstromsynchronmotors vorgesehene Versorgungsspannung lediglich während der Anlaufphase mit der hochfrequenten Spannung überlagert, d.h. vorzugsweise wird das Stellglied ohne der überlagerten hochfrequenten Spannung betrieben, nachdem der Drehstromsynchronmotor die vorgegebene Grenzdrehzahl erreicht hat. Vorzugsweise wird also der Drehstromsynchronmotor während der Betriebsphase ohne der überlagerten hochfrequenten Spannung betrieben, was sich positiv auf den Energieverbrauch des elektrischen Antriebs und somit des Haushaltsgerätes auswirken kann.

Nach einer bevorzugten Ausführungsform des erfindungsgemäßen Verfahrens umfasst dieses ein Erzeugen eines Ansteuersignals für das Stellglied durch Überlagern des vom Stromregler erzeugten, der Versorgungspannung zugeordneten Signals mit einem der hochfrequenten Spannung zugeordneten Signal. Das erfindungsgemäße Haushaltsgerät ist somit vorzugsweise eingerichtet, ein Ansteuersignal für das Stellglied zu erzeugen, durch ein Überlagern eines vom Stromregler erzeugten, der Versorgungsspannung zugeordneten Signals mit einem der hochfrequenten Spannung zugeordneten Signal. Diese beiden Signale können in relativ einfacher weise addiert werden, wodurch in relativ einfacher weise das Steuerglied aufgrund des Ansteuersignals die mit der hochfrequenten Spannung überlagerte Versorgungsspannung für den Drehstromsynchronmotor erzeugen kann.

Bei der feldorientierten Regelung werden die Strangströme des Drehstrommotors in Längs- und Querströme transformiert. Die Längs- und Querströme werden für den Stromregekreis verwendet, um daraus ein der Versorgungsspannung zugeordnetes Signal zum Ansteuern des Stellglieds zu erhalten. Dem Längsstrom und dem Querstrom sind jeweils ein Stromregler zugeordnet. Vorzugsweise wird das der hochfrequenten Spannung zugeordnete Signal lediglich dem von dem Längsstrom zugeordneten Stromregler erzeugten Signals überlagert.

Bei der feldorientierten Regelung kann es vorgesehen sein, dass der Soll-Wert des Längsstroms gleich Null ist. Vorzugswesie ist die feldorientierte Regelung nach dem sogenannten maximum torque per ampere Prinzip, um insbesondere bei unterschiedlich großen Längs- und Querinduktivitäten des Drehstromsynchronmotors den Energieverbrauch des elektrischen Antriebs und somit des Haushaltsgerätes zu verringern. In diesem Fall wird nicht der Sollwert des Längsstroms zu Null oder auf einen festen Wert gesetzt, sondern u.a. aufgrund einer Beziehung zwischen den Längs- und Querinduktivitäten und aufgrund des vom äußeren Drehzahlregelkreises ermittelten Signals, das dem vom Drehstromsynchronmotor aufzubringenden Drehmoment zugeordnet ist, ermittelt. Da diese genannte Beziehung eine nichtlineare ist, werden die Sollwerte des Längs- und des Querstroms vorzugsweise in einer Look-up Tabelle hinterlegt.

Das der hochfrequenten Spannung zugeordnete Signal kann z.B. sinusförmig sein. Vorzugsweise ist es rechteckförmig.

Im Falle der diskreten feldorientierten Regelung wird vorzugsweise der Stromregler mit einer Reglerfrequenz betrieben, die gleich der Frequenz der hochfrequenten Spannung bzw. des der hochfrequenten Spannung zugeordneten Signals ist. Insbesondere kann es auch vorgesehen sein, dass die Frequenz der hochfrequenten Spannung bzw. des der hochfrequenten Spannung zugeordneten Signals ein ganzzahliges Vielfaches der Reglerfrequenz ist.

Um die hochfrequenten Stromanteile der Längs- und Querströme in relativ einfacher weise zu erhalten, weist das erfindungsgemäße Verfahren gemäß einer bevorzugten Variante ein diskretes Messen der Längs- und Querströme zumindest während der Anlaufphase mit der doppelten Frequenz der Frequenz der hochfrequenten Spannung auf, wobei die Messungen derart getaktet sind, dass bei zwei hintereinander erfolgten Messungen eine der Messungen beim Maximum und die andere Messung beim Minimum der gemessenen Ströme erfolgen. Das erfindungsgemäße Haushaltsgerät ist somit gemäß einer bevorzugten Ausführung derart ausgebildet, dass es die Längs- und Querströme zumindest während der Anlaufphase mit der doppelten Frequenz der Frequenz der hochfrequenten Spannung misst, wobei die Messungen derart getaktet sind, dass bei zwei hintereinander erfolgten Messungen eine der Messungen beim Maximum und die andere Messung beim Minimum der gemessenen Ströme erfolgen. Dann können die hochfrequenten Stromanteile der Längs- und Querströme durch Differenzbilden der gemessenen entsprechenden Ströme zweier hintereinander folgender Messungen ermittelt werden.

Das Haushaltsgerät ist z.B. eine Haushaltswaschmaschine mit einer drehbar gelagerten Wäschetrommel als die vom elektrischen Antrieb angetriebene Komponente.

Das Haushaltsgerät ist z.B. eine Haushaltsgeschirrspülmaschine mit einer Laugenpumpe als der Komponente.

Vorzugsweise ist die Komponente ein Verdichter, der eine Verdichterkammer umfasst und zum Verdichten eines Fluids vorgesehen ist.

Ein Beispiel eines Haushaltsgerätes mit einem Verdichter, ist ein Haushaltswäschetrockner, der einen den Verdichter umfassenden Wärmepumpenkreislauf und den geregelten elektrischen Antrieb umfasst.

Ein weiteres Beispiel eines Haushaltsgerätes mit einem Verdichter ist ein Haushaltskältegerät, das einen wärmeisolierten Korpus mit einem kühlbaren Innenbehälter, der einen zum Lagern von Lebensmitteln vorgesehenen kühlbaren Innenraum begrenzt, einen zum Kühlen des kühlbaren Innenraums vorgesehenen Kältemittelkreislauf mit einem Kühlmittel als das Fluid und dem Verdichter, und den geregelten elektrischen Antrieb umfasst.

Das als Haushaltskältegerät umfasst den wärmeisolierten Korpus mit dem Innenbehälter, der den kühlbaren Innenraum begrenzt. Der kühlbare Innenraum ist zum Lagern von Lebensmitteln vorgesehen und wird mittels des Kältemittelkreislaufs gekühlt.

Der kühlbare Innenraum kann vorzugsweise mittels eines Türblatts verschlossen werden. Das Türblatt ist vorzugsweise bezüglich einer Achse, die vorzugsweise vertikal verläuft, schwenkbar gelagert. Im geöffneten Zustand ist der kühlbare Innenraum zugänglich.

Der Kältemittelkreislauf als solcher ist dem Fachmann im Prinzip bekannt und umfasst den Verdichter und insbesondere einen dem Verdichter nachgeschalteten Verflüssiger, eine dem Verflüssiger nachgeschaltete Drosselvorrichtung und einen Verdampfer, der zwischen der Drosselvorrichtung und dem Verdichter angeordnet ist.

Vorzugsweise umfasst die Verdichterkammer des Verdichters einen Einlass und einen Auslass, einen innerhalb der Verdichterkammer verschieblich gelagerten Kolben und eine Kurbelwelle. In diesem Fall ist der Rotor des Drehstromsynchronmotors über die Kurbelwelle mit dem Kolben gekoppelt, sodass im Betrieb des Verdichters der Kolben mittels des Drehstromsynchronmotors ein von der Verdichterkammer und dem Kolben eingeschlossenes Volumen zum Verdichten des Fluids zu verkleinern vermag, wobei in einer bestimmten Position des Kolbens relativ zur Verdichterkammer das Volumen minimal und in einer weiteren bestimmten Position des Kolbens relativ zur Verdichterkammer das Volumen maximal ist. Ein solcher Verdichter wird üblicherweise als Hubkolben-Verdichter bezeichnet. Bevorzugt kann dann das Stellglied zu Beginn der Anlaufphase derart angesteuert werden, dass dieser vor dem drehzahlgeregelten Anfahren den Kolben weg von der bestimmten Position bewegt.

Im Betrieb des Verdichters und im Falle des Haushaltskältegerätes wird der Drehstromsynchronmotor insbesondere mit einer z.B. von einer elektronischen Steuervorrichtung oder einer Temperaturregelung des Haushaltskältegerätes ermittelten bzw. vorgegebenen Drehzahl betrieben.

Hubkolben-Verdichter weisen eine charakteristische Drehmomentkurve auf. Diese kann in Abhängigkeit vom Lastpunkt, aber auch von der Drehzahl des Drehstromsynchronmotors abhängen. Auch mechanische Gegebenheiten des Verdichters, wie z.B. ein Trägheitsmoment rotierenden Bestandteile des Verdichters können, eine Auswirkung auf den Betrieb des Drehstromsynchronmotors haben.

In einer bestimmten Position des Kolbens relativ zur Verdichterkammer ist das Volumen minimal. Diese bestimmte Position wird üblicherweise als oberer Totpunkt bezeichnet.

In einer weiteren bestimmten Position des Kolbens relativ zur Verdichterkammer ist das Volumen maximal. Diese weitere bestimmte Position wird üblicherweise als unterer Totpunkt bezeichnet.

Bewegt der Drehstromsynchronmotor den Kolben von seiner bestimmten Position, d.h. von seinem oberen Totpunkt, in seine weitere bestimmte Position, d.h. in seinen unteren Totpunkt, so erhöht sich das Volumen und der Verdichter saugt das Fluid durch seinen Einlass ein.

Bewegt der Drehstromsynchronmotor den Kolben von seiner weiteren bestimmten Position, d.h. von seinem unteren Totpunkt, in seine bestimmte Position, d.h. in seinen oberen Totpunkt, so verringert sich das Volumen und der Verdichter verdichtet das in der Verdichterkammer befindliche Fluid, bis sich der Auslass am oberen Totpunkt öffnet, damit das verdichtete Fluid zum Verflüssiger gelangen kann.

Beim Anfahren des Verdichters bzw. des Rotors kann somit drehzahlgeregelt hochgefahren werden, wodurch es möglich ist, nur das Drehmoment zu stellen, welches wirklich zum Anlauf benötigt wird. Dadurch wird die Gefahr eines Feldabrisses unterbunden. Außerdem wird ggf. der Anlaufstrom dadurch auf ein Mindestmaß begrenzt, was energetische Vorteile bringen kann. Hinzu ergibt sich ggf. eine geringere Maximalbelastung des Umrichters, insbesondere seiner Endstufentransistoren. Das wirkt sich positiv auf die Lebensdauer des Umrichters aus und es können ggf. geringer dimensionierte und somit kostengünstigere Bauteile verwendet werden.

Dieses Verfahren kann auch mit einer Vorabausrichtung durch eine konstante Bestromung kombiniert werden. Bei einer festzulegenden Drehzahl n wird wieder auf die vom Beobachter geschätzte Position zurückgegriffen, da die für die HFI notwendigen Berechnungszeiten bei höheren Drehzahlen auf den ggf. verwendeten Mikrocontrollern nicht eingehalten werden können.

Ausführungsbeispiele der Erfindung sind exemplarisch in den beigefügten schematischen Zeichnungen dargestellt. Es zeigen:
- Fig. 1: ein Haushaltskältegerät in einer perspektivischen Darstellung,
- Fig. 2: einen, einen Verdichter aufweisenden Kältemittelkreislauf des Haushaltskältegerätes,
- Fig. 3: den Verdichter,
- Fig. 4: einen feldorientiert geregelten elektrischen Antrieb des Haushaltskältegerätes,
- Fig. 5: die Struktur der feldorientierten Regelung des feldorientiert geregelten elektrischen Antriebs,
- Fig. 6: ein hochfrequentes Signal,
- Fig. 7: ein Ansteuersignal für einen Umrichter des feldorientiert geregelten elektrischen Antrieb,
- Fig. 8: einen Duty-Cycle,
- Fig. 9: einen Längsstrom, der einen hochfrequenten Stromanteil umfasst,
- Fig. 10: eine alternative Struktur der feldorientierten Regelung, und
- Fig. 11: einen Haushaltswäschetrockner.

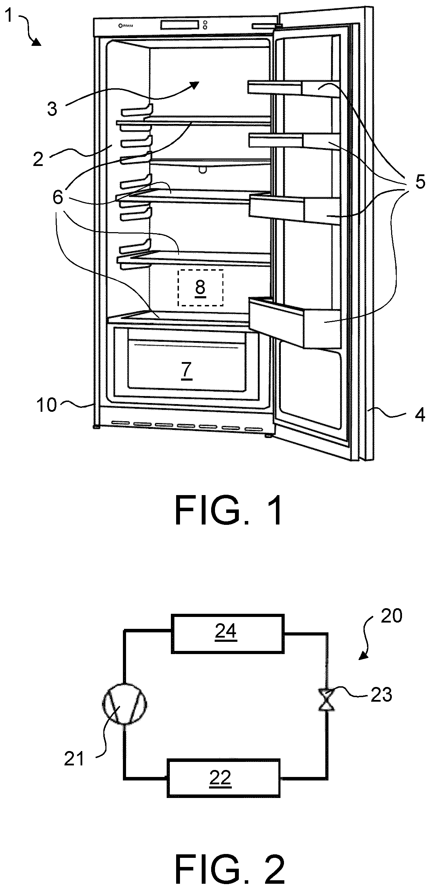

Die Fig. 1 zeigt in einer perspektivischen Darstellung ein Haushaltskältegerät 1 als Beispiel eines Haushaltsgerätes, das eine Komponente und einen geregelten elektrischen Antrieb aufweist, der einen permanenterregten Drehstromsynchronmotor, ein insbesondere als Umrichter ausgebildetes Stellglied zum Ansteuern des Drehstromsynchronmotors und eine feldorientierte Regelung zum Ansteuern des Stellglieds aufweist, wobei der Drehstromsynchronmotor einen Stator und einen bezüglich des Stators drehbar gelagerten Rotor umfasst und Teil der Komponente ist oder vorgesehen, diese Komponente anzutreiben.

Das Haushaltskältegerät 1 umfasst insbesondere einen wärmeisolierten Korpus 10 mit einem Innenbehälter 2, der einen kühlbaren Innenraum 3 begrenzt. Der kühlbare Innenraum 3 ist zum Lagern von nicht näher dargestellten Lebensmitteln vorgesehen.

Das Haushaltskältegerät 1 weist im Falle des vorliegenden Ausführungsbeispiels ein schwenkbares Türblatt 4 zum Verschließen des kühlbaren Innenraums 3 auf. Das Türblatt 4 ist insbesondere bezüglich einer vertikal verlaufenden Achse schwenkbar gelagert. Bei geöffnetem Türblatt 4, wie in der Fig. 1 dargestellt, ist der kühlbare Innenraum 3 zugänglich.

An der in Richtung kühlbaren Innenraum 3 gerichteten Seite des Türblatts 4 sind im Falle des vorliegenden Ausführungsbeispiels mehrere Türabsteller 5 zum Lagern von Lebensmitteln angeordnet. Im kühlbaren Innenraum 3 sind insbesondere mehrere Fachböden 6 zum Lagern von Lebensmitteln angeordnet und im unteren Bereich des kühlbaren Innenraums 3 ist insbesondere eine Schublade 7 angeordnet, in der ebenfalls Lebensmittel gelagert werden können.

Das Haushaltskältegerät 1 umfasst einen in der Fig. 2 gezeigten Kältemittelkreislauf 20 zum Kühlen des kühlbaren Innenraums 3. Im Falle des vorliegenden Ausführungsbeispiels umfasst der Kältemittelkreislauf 20 ein nicht näher dargestelltes, dem Fachmann im Prinzip jedoch bekanntes Kältemittel, einen Verdichter 21, einen dem Verdichter 21 nachgeschalteten Verflüssiger 22, eine dem Verflüssiger 22 nachgeschaltete Drosselvorrichtung 23, die insbesondere als ein Drossel- oder Kapillarrohr ausgeführt ist, und einen Verdampfer 24, der zwischen der Drosselvorrichtung 23 und dem Verdichter 21 angeordnet ist. Der Verdichter 21 ist vorzugsweise innerhalb eines Maschineraums des Haushaltkältegerätes 1 angeordnet, der sich insbesondere hinter der Schublade 7 befindet.

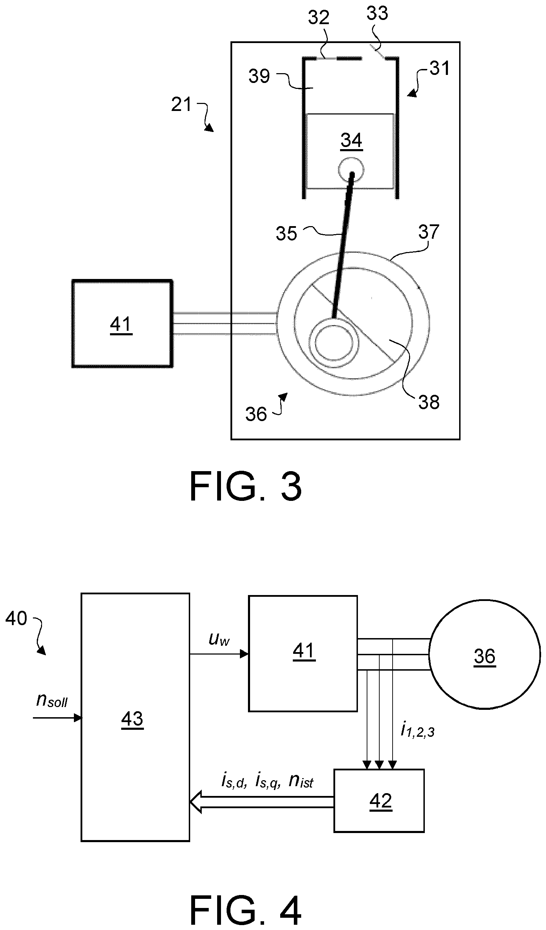

Der Verdichter 21 ist als ein Hubkolbenverdichter ausgeführt und in der Fig. 3 näher dargestellt.

Der Verdichter 21 umfasst eine Verdichterkammer 31 mit einem Einlass 32 und mit einem Auslass 33 für das Kältemittel, und einen innerhalb der Verdichterkammer 31 verschieblich gelagerten Kolben 34. Der Einlass 33 und der Auslass 33 sind jeweils mit entsprechenden Ventilen versehen, wie dies dem Fachmann im Prinzip bekannt ist.

Der Verdichter 21 umfasst eine Kurbelwelle 35 und einen Drehstromsynchronmotor 36. Der Verdichter 21 ist ein Beispiel der obenstehend genannten Komponente.

Der Drehstromsynchronmotor 36 ist insbesondere ein permanenterregter Drehstromsynchronmotor, vorzugsweise ein bürstenloser Gleichstrommotor, und umfasst einen Stator 37 und einen relativ zum Stator 37 drehbar gelagerten Rotor 38. Eines der Enden der Kurbelwelle 35 ist mit dem Kolben 34 und das andere Ende der Kurbelwelle 35 ist mit dem Rotor 38 des Drehstromsynchronmotors 36 gekoppelt, sodass im bestimmungsgemäßen Betrieb des Haushalskältegerätes 1 bzw. des Verdichters 21 der Kolben 34 mittels des Drehstromsynchronmotors 36 ein von der Verdichterkammer 31 und dem Kolben 34 eingeschlossenes Volumen 39 zum Verdichten des Kühlmittels zu verkleinern vermag.

Das Haushaltskältegerät 1 umfasst im Falle des vorliegenden Ausführungsbeispiels eine elektronische Steuervorrichtung 8, die eingerichtet ist, den Kältemittelkreislauf 20, insbesondere den Verdichter 21 des Kältemittelkreislaufs 20 derart anzusteuern, dass der kühlbare Innenraum 3 zumindest in etwa eine vorgegebene oder vorgebbare Soll-Temperatur aufweist. Die elektronische Steuervorrichtung 8 ist vorzugsweise derart eingerichtet, dass sie die Temperatur des kühlbaren Innenraums 3 regelt. Um gegebenenfalls die Ist-Temperatur des kühlbaren Innenraums 3 zu erhalten, kann das Haushaltskältegerät 1 wenigstens einen nicht näher dargestellten und mit der elektronischen Steuervorrichtung 8 verbundenen Temperatursensor aufweisen.

Um den Kältemittelkreislauf 20 anzusteuern bzw. zu regeln, umfasst das Haushaltskältegerät 1 im Falle des vorliegenden Ausführungsbeispiels einen in der Fig. 4 gezeigten feldorientiert geregelten elektrischen Antrieb 40, welcher den Drehstromsynchronmotor 36 des Verdichters 21 aufweist. Bei Bedarf wird der Drehstromsynchronmotor 36 entsprechend einer von der elektronischen Steuervorrichtung 8 vorgegebenen Soll-Drehzahl *nₛₒₗₗ* angetrieben. Die Soll-Drehzahl *nₛₒₗₗ* wird insbesondere von der elektronischen Steuervorrichtung 8 aufgrund einer beabsichtigten Kühlung des kühlbaren Innenraums 3 berechnet bzw. vorgegeben, beispielsweise aufgrund der aktuellen Temperatur und der Soll-Temperatur des kühlbaren Innenraums 3.

Insbesondere weist der Drehstromsynchronmotor 36 eine Längsinduktivität *L_{d}* und eine Querinduktivität *L_{q}* auf, die sich im Falle des vorliegenden Ausführungsbeispiels unterscheiden. Im Falle des vorliegenden Ausführungsbeispielswurden die Kennfelder für die Längsinduktivität *L_{d}* und die Querinduktivität *L_{q}* vermessen

Der elektrische Antrieb 40 umfasst ein Stellglied zum Antreiben des Drehstromsynchronmotors 36. Das Stellglied ist als Umrichter 41 ausgeführt und erzeugt im Betrieb des elektrischen Antriebs 40 eine dreiphasige Versorgungsspannung, deren Grundschwingung eine Amplitude und eine Grundfrequenz *f* aufweist, die indirekt abhängig von der Soll-Drehzahl *nₛₒₗₗ* und einer Ist-Drehzahl *nᵢₛₜ* des Drehstromsynchronmotors 36 ist.

Im Falle des vorliegenden Ausführungsbeispiels weist der feldorientiert geregelte elektrische Antrieb 40 eine Messvorrichtung 42 auf, mittels derer die elektrischen Strangströme *i_{1,2,3}* des Drehstromsynchronmotors 36 gemessen werden und die Ist-Drehzahl des Drehstromsynchronmotors 36 sensorlos ermittelt wird. Die Messvorrichtung 42 ist auch vorgesehen, aus den Strangströme *i_{1,2,3}* transformierte Quer- und Längsströme *i_{q}, i_{d}* zu errechnen, wie dies dem Fachmann im Prinzip geläufig ist. Aus den Quer- und Längsströme *i_{q}, i_{d}* und einem mathematischen Modell des Drehstrommotors 36 kann die Ist-Drehzahl *nᵢₛₜ* des Drehstromsynchronmotors 36 errechnet werden, wie es dem Fachmann im Prinzip geläufig ist.

Im Falle des vorliegenden Ausführungsbeispiels weist der feldorientiert geregelte elektrische Antrieb 40 einen feldorientierte Regelung 43 auf, die den Umrichter 41 ansteuert.

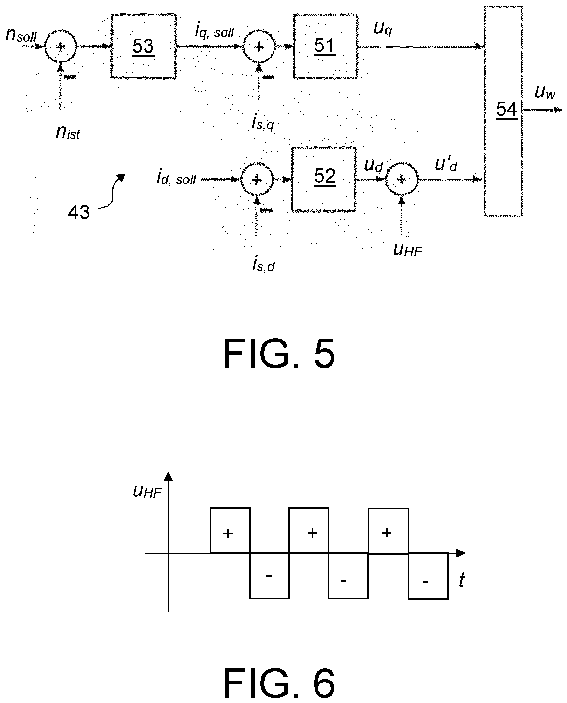

Die feldorientierte Regelung 43 bildet eine Kaskadenstruktur mit innenliegenden Stromregelkreisen, denen ein äußerer Drehzahlregelkreis überlagert ist, wie dies dem Fachmann im Prinzip geläufig ist. Die Fig. 5 zeigt teilweise diese Struktur.

Für die feldorientierte Regelung ergibt sich eine Regelstruktur, bei der die transformierten Quer- und Längsströme *i_{q}, i_{d}* mittels der Stromregelkreise geregelt werden. Im Falle des vorliegenden Ausführungsbeispiels umfassen die Stromregelkreise vorzugsweise einen ersten Stromregler 51 für den Querstrom *i_{q}* und einen zweiten Stromregler 52 für den Längsstrom *i_{d}*. Die beiden Stromregler 51, 52 sind insbesondere PI-Regler.

Die feldorientierte Regelung 43 bzw. die Messvorrichtung 42 ist im Falle des vorliegenden Ausführungsbeispiels derart ausgeführt, dass sie die Strangströme *i_{1,2,3}* des Drehstromsynchronmotors 36 in auf den Rotor des Drehstromsynchronmotors 36 bezogene rotorfeste Längs- und Querstrom-Ist-Werte *i_{s,d}, i_{s,q}* transformiert. Die Abweichung zwischen dem Sollwert *i_{q,soll}* des Querstroms *i_{q}* und dem Querstroms-Ist-Wert *i_{s,q}* ist das Eingangssignal für den ersten Stromregler 51, und die Abweichung zwischen dem Längsstrom-Sollwert *i_{d,soll}* und dem Längsstrom-Ist-Wert *i_{s,d}* ist das Eingangssignal für den zweiten Stromregler 52.

Die Ausgangssignale *u_{q}, u_{d}* der beiden Stromregler 51, 52 entsprechen transformierten elektrischen Spannungen, welche mittels einer dem Fachmann im Prinzip bekannten Transformation 54 in zum Ansteuern des Umrichters 41 geeignete Signale *u_{w}* transformiert werden.

Im Falle des vorliegenden Ausführungsbeispiels wird während einer Anlaufphase des Verdichters 21 das Ausgangssignal *u_{d}* des zweiten Stromreglers 52 mit einem hochfrequenten Signal *u_{HF}* überlagert, woraus ein Signal *u'_{d}* entsteht, sodass während der Anlaufphase des Verdichters das zum Ansteuern des Umrichters 41 vorgesehene Signal *u_{w}* ebenfalls eine Information über das hochfrequente Signal *u_{HF}* aufweist. Dadurch weist die für den Drehstromsynchronmotor 36 vorgesehenen Versorgungsspannung ebenfalls einen hochfrequenten Spannungsanteil auf, wodurch die Strangströme *i_{1,2,3}* und die Längs- und Querstrom-Ist-Werte *i_{s,d}, i_{s,q}* entsprechende hochfrequente Stromanteile aufweisen.

Der Querstrom-Sollwert *i_{q,soll}* ergibt sich im Falle des vorliegenden Ausführungsbeispiels aufgrund dieses äußeren Drehzahlregelkreises, welcher einen Regler 53 aufweist und welcher abhängig von der Soll-Drehzahl *nₛₒₗₗ* und der Ist-Drehzahl *nᵢₛₜ* berechnet wird. Der Regler 53 ist insbesondere ein PI-Regler.

Im Falle des vorliegenden Ausführungsbeispiels ist der Längsstrom-Sollwert *i_{d,soll}* gleich Null.

Die feldorientierte Regelung 43 ist im Falle des vorliegenden Ausführungsbeispiels vorzugsweise eine diskrete bzw. digitale feldorientierte Regelung 43. Die Takt- bzw. Regelfrequenz der diskreten bzw. digitalen feldorientierten Regelung 43 und somit der beiden Stromregler 51, 52 ist beispielsweise 4kHz.

Für die feldorientierte Regelung 43 ist es nötig, die Winkelposition des Rotors 38 relativ zum Stator 37 des Drehstromsynchronmotors 36 zu kennen. Die Winkelposition wird sensorlos bzw. ohne einen Geber ermittelt.

Während der Anlaufphase des feldorientiert geregelten elektrischen Antriebs 40 insbesondere aus dem Stillstand weisen die Längs- und Querströme Ist-Werte *i_{s,d}, i_{s,q}* die hochfrequenten Stromanteile auf. Aufgrund dieser hochfrequenten Stromanteile ist es dann möglich, auch bei relativ niedrigen Drehzahlen eine für die feldorientierte Regelung nötige Winkelposition des Rotors zu ermitteln, und somit während der Anfahrphase die Drehzahl des Drehstromsynchronmotors 36 durch drehzahlgeregeltes Betreiben des geregelten elektrischen Antriebs 43 mittels der feldorientierten Regelung 43 und in Abhängigkeit der mittels der hochfrequenten Stromanteile der Längs- und Querströme Ist-Werte *i_{s,d}, i_{s,q}* ermittelten Winkelposition des Rotors 38 relativ zum Stator 37 zu erhöhen, bis der Drehstromsynchronmotor 36 eine vorgegebene Grenzdrehzahl von z.B. 1000 Umdrehungen pro Minute erreicht.

Im Falle des vorläufigen Ausführungsbeispiels ist das der hochfrequenten Spannung zugeordnete Signal (hochfrequente Signal *u_{HF}*) rechteckförmig und weist eine Frequenz gleich der Reglerfrequenz der feldorientierten Regelung 43 auf, ist also im Falle des vorliegenden Ausführungsbeispiels 4kHz.

Der Anlaufphase folgt eine Betriebsphase, während der der Versorgungsspannung kein hochfrequenter Anteil überlagert ist. Während der Betriebsphase wird der feldorientierte geregelte elektrische Antrieb 40 drehzahlgeregelt mittels der feldorientierten Regelung 43 und in Abhängigkeit einer mittels der Längs- und Querströme Ist-Werte *i_{s,d}, i_{s,q}* und des mathematischen Modells ermittelten Winkelposition des Rotors relativ zum Stator betrieben.

Die beiden Stromregler 51, 52 laufen u.a. in einem Takt, der der Reglerfrequenz von insbesondere 4kHz zugeordnet ist. Der Verlauf des rechteckförmige hochfrequenten Signals *u_{HF}* ist in der Fig. 6 gezeigt und weist insbesondere eine Spannung von ± 10 V auf.

Das pulsweitenmodulierte Signal für den Umrichter 41 läuft z.B. in einem Takt entsprechend 8 kHz.

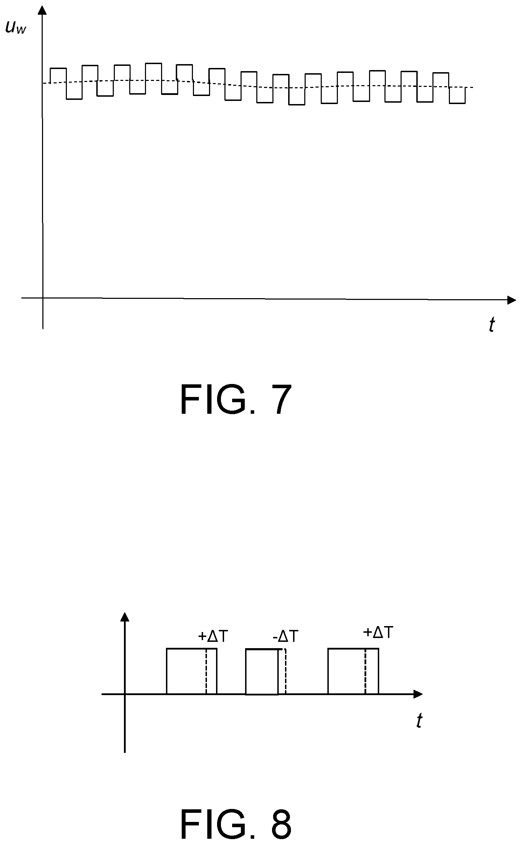

Insbesondere wird das der hochfrequenten Spannung zugeordnete Signal (hochfrequentes Signal *u_{HF}*) abwechselnd auf das Ausgangssignal *u_{d}* des zweiten Stromreglers 52 addiert und subtrahiert. Die Fig. 7 zeigt den Verlauf des zum Ansteuern des Umrichters 41 vorgesehenen Signal *u_{w}*. Der Vorteil liegt darin, dass die Demodulation damit vereinfacht wird. Bei dem vorgestellten Vorgehen können die unterschiedlichsten Muster eingeprägt werden. Die Amplitude des der hochfrequenten Spannung zugeordneten Signals (hochfrequentes Signal *u_{HF}*) wurde durch Versuche ermittelt.

Wird dieses Muster in den Duty-Cycle umgerechnet, ergibt sich eine Änderung der Duty-Cycle Längen entsprechend der Fig. 8. Je nachdem, ob durch die hochfrequente Überlagerung das Muster positiv oder negativ geändert wurde, wird der Duty-Cyle um ein ΔT verlängert oder verkürzt. Die Stromregler "sehen" davon nichts, da der Mittelwert identisch ist (bezogen auf 4kHz).

Im Falle des vorläufigen Ausführungsbeispiels werden die hochfrequenten Stromanteile der Längs- und Querströme erhalten, indem die Messvorrichtung 42 ein diskrete Messung mit einer Frequenz durchführt, die doppelt so groß ist wie die Frequenz des hochfrequenten Signals *u_{HF}.*

Die entsprechende Messungen sind derart getaktet, dass bei zwei hintereinander erfolgten Messungen eine der Messungen beim Maximum und die andere Messung beim Minimum der gemessenen Ströme erfolgt. Dann können die hochfrequenten Stromanteile der Längs- und Querströme durch Differenzbilden der gemessenen entsprechenden Ströme zweier hintereinander folgender Messungen ermittelt werden.

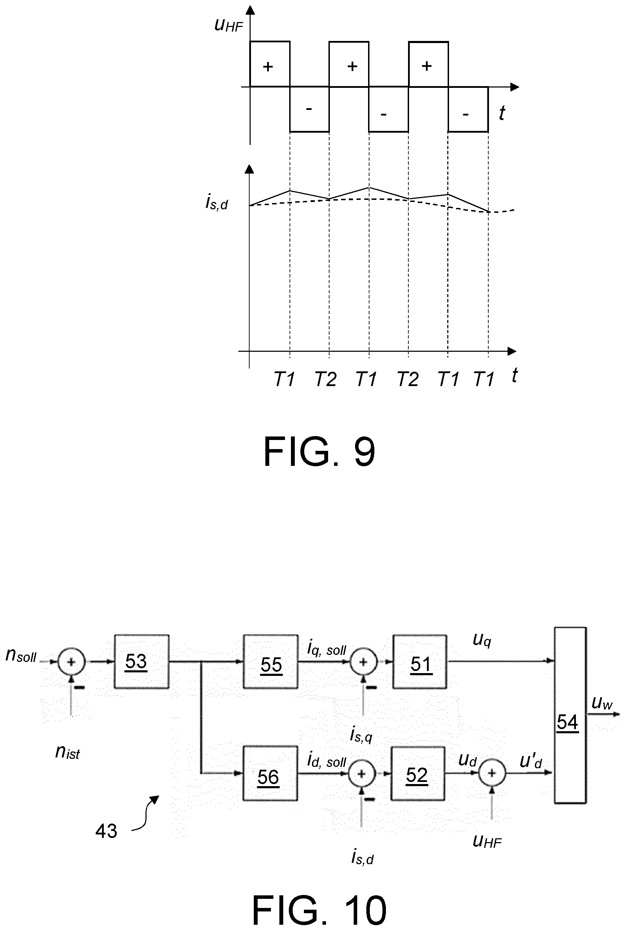

Insbesondere werden im Falle des vorliegenden Ausführungsbeispiels die Strangströme *i_{1,2,3}* im 8kHz-Takt gemessen. Die Strangströme *i_{1,2,3}* werden über eine dem Fachmann bekannte Transformation nach in die Längs- und Querströme Ist-Werte *i_{s,d}, i_{s,q}* transformiert. Die Längs- und Querströme weisen ebenfalls hochfrequente Stromanteile auf. Die Fig. 9 zeigt den Verlauf des Längsquerstroms.

Die Längs- und Querströme weisen z.B. jeweils einen hochfrequenten Stromanteil und einen Gleichanteil auf. Da mit doppelter Reglerfrequenz gemessen wird, liegen pro Reglertakt für die Längs- und Querströme jeweils zwei Messungen vor.

Wie bereits erläutert, gilt bei zwei hintereinander erfolgten Messungen, dass eine der Messungen beim Maximum (jeweils bei T1 in der Fig. 9) und die andere Messung beim Minimum (jeweils bei T2 in der Fig. 9) der gemessenen Ströme erfolgt. Dann können die hochfrequenten Stromanteile der Längs- und Querströme durch Differenzbilden der gemessenen entsprechenden Ströme zweier hintereinander folgender Messungen ermittelt werden. Die bei T2 erfolgte Messung wird für die Stromregelung verwendet. Aufgrund der Kennfelder der Längs- und Querinduktivitäten kann dadurch die Winkelposition des Rotors während der Anlaufphase ermittelt werden.

Im Falle des vorliegenden Ausführungsbeispiels ist e noch vorgesehen, den Umrichter 41 zu Beginn der Anlaufphase derart anzusteuern, dass dieser vor dem drehzahlgeregelten Anfahren den Kolben 34 weg von der bestimmten Position bewegt.

Die Fig. 10 zeigt eine alternative Struktur des feldorientierten Regelung 43, die auf dem sogenannten maximum torque per ampere Prinzip beruht. Bei diesem Prinzip wird der Längsstrom-Sollwert *i_{d,soll}* nicht auf Null gesetzt, sondern wie der Querstrom-Sollwert *i_{q,soll}* durch den äußeren Drehzahlregelkreis bestimmt. Das von äußeren Drehzahlregelkreis erzeugte Signal liegt am Ausgang de Reglers 53 an und ist dem von Drehstromsynchronmotor 36 aufzubringenden Drehmoment zugeordnet.

Zusätzlich weist die in der Fig. 10 gezeigte Struktur einen ersten Funktionsblock 55 und einen zweiten Funktionsblock 56 auf. Der erste Funktionsblock 55 befindet sich zwischen dem Ausgang des Reglers 53 des äußeren Drehzahlregelkreises und der Differenzbildung aus dem Querstrom-Sollwert *i_{q,soll}* und des Querstrom-Ist-Werts *i_{s,q}*. Der zweite Funktionsblock 56 befindet sich zwischen dem Ausgang des Reglers 53 des äußeren Drehzahlregelkreises und der Differenzbildung aus dem Längsstrom-Sollwert *i_{d,soll}* und des Querstrom-Ist-Werts *i_{d,q}.*

Der Längsstrom-Sollwert *i_{d,soll}* und der Querstrom-Sollwert *i_{q,soll}* werden u.a. aufgrund einer Beziehung zwischen den Längs- und Querinduktivitäten und aufgrund des vom äußeren Drehzahlregelkreises ermittelten Signals ermittelt. Da diese genannte Beziehung eine nichtlineare ist, werden der Längsstrom-Sollwert *i_{d,soll}* und der Querstrom-Sollwert *i_{q,soll}* vorzugsweise mittels einer in den Funktionsblöcken 55, 56 hinterlegten Look-up Tabelle ermittelt.

Somit ist das Ausgangssignal des ersten Funktionsblocks 55 der Querstrom-Ist-Wert *i_{s,q}* und das Ausgangssignal des zweiten Funktionsblocks 56 ist der Längs-Ist-Wert *i_{s,d}.*

Die Funktionen der beiden Funktionsblöcke 55, 56 ergeben sich aus den Kennlinienfelder der Längs- und Querinduktivitäten *L_{d}, L_{q}* und sind z.B. in einer Look-up Tabelle gespeichert.

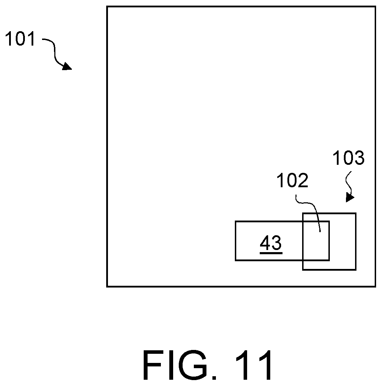

Die Fig. 11 zeigt als ein weiteres Beispiel eines Haushaltsgerätes einen Haushaltswäschetrockner 101, der einen entsprechenden feldorientiert geregelten elektrischen Antrieb 43 aufweist, dessen Drehstromsynchronmotor Teil eines Verdichter 102 ist oder vorgesehen ist, den Verdichter 102 anzutreiben. Der Verdichter 102 ist Teil eines Wärmepumpenkreislaufs 103.

### BEZUGSZEICHENLISTE

- 1: Haushaltskältegerät
- 2: Innenbehälter
- 3: kühlbarer Innenraum
- 4: Türblatt
- 5: Türabsteller
- 6: Fachböden
- 7: Schublade
- 8: elektronische Steuervorrichtung
- 10: Korpus
- 20: Kältemittelkreislauf
- 21: Verdichter
- 22: Verflüssiger
- 23: Drosselvorrichtung
- 24: Verdampfer
- 31: Verdichterkammer
- 32: Einlass
- 33: Auslass
- 34: Kolben
- 35: Kurbelwelle
- 36: Drehstromsynchronmotor
- 37: Stator
- 38: Rotor
- 39: Volumen
- 40: elektrischer Antrieb
- 41: Umrichter
- 42: Messvorrichtung
- 43: feldorientierte Regelung
- 51: erster Stromregler
- 52: zweiter Stromregler
- 53: Regler
- 54: Transformation
- 55: erster Funktionsblock
- 56: zweiter Funktionsblock
- 101: Haushaltswäschetrockner
- 102: Verdichter
- 103: Wärmepumpenkreislauf
- *i_{1,2,3}*: Strangströme
- *nₛₒₗₗ*: Soll-Drehzahl
- *nᵢₛₜ*: Ist-Drehzahl
- *i_{s,d}*: Längsstrom-Ist-Wert
- *i_{s,q}*: Querstrom-Ist-Wert
- *i_{d,soll}*: Längsstrom-Sollwert
- *i_{q,soll}*: Querstrom-Sollwert
- *u_{q}, u_{d}*: Ausgangssignale
- *u_{w}*: Signal
- *u_{HF}*: hochfrequente Signal

## Patentansprüche

1. Verfahren zum Betreiben eines Haushaltsgerätes (1, 101), das eine Komponente (21, 102) und einen geregelten elektrischen Antrieb (40) aufweist, der einen permanenterregten Drehstromsynchronmotor (36), ein insbesondere als Umrichter (41) ausgebildetes Stellglied zum Ansteuern des Drehstromsynchronmotors (36) und eine feldorientierte Regelung (43) zum Ansteuern des Stellglieds aufweist, wobei der Drehstromsynchronmotor (36) einen Stator (37) und einen bezüglich des Stators (37) drehbar gelagerten Rotor (38) umfasst und Teil der Komponente (21, 102) ist oder vorgesehen ist, diese Komponente (21, 102) anzutreiben, aufweisend folgende Verfahrensschritte:
während einer Anlaufphase des elektrischen Antriebs (40),
- Überlagern einer von dem Stellglied erzeugten und zum Betreiben des Drehstromsynchronmotors (36) vorgesehenen Versorgungsspannung mit einer hochfrequenten Spannung, wodurch Strangströme des Drehstromsynchronmotors (36) entsprechende hochfrequente Stromanteile aufweisen,
- Ermitteln von dem Drehstromsynchronmotor (36) zugeordnete Längs- und Querströme aus den Strangströmen, die der hochfrequenten Spannung entsprechende hochfrequente Stromanteile aufweisen,
- Ermitteln der Winkelposition des Rotors (38) relativ zum Stator (37) in Abhängigkeit der hochfrequenten Stromanteile der Längs- und Querströme, und
- Erhöhen der Drehzahl des Drehstromsynchronmotors (36) durch drehzahlgeregeltes Betreiben des geregelten elektrischen Antriebs (40) mittels der feldorientierten Regelung (43) und in Abhängigkeit der mittels der hochfrequenten Stromanteile der Längs- und Querströme ermittelten Winkelposition des Rotors (38) relativ zum Stator (37) bis der Drehstromsynchronmotor (36) eine vorgegebene Grenzdrehzahl erreicht,
wobei die feldorientierte Regelung (43) eine Kaskadenstruktur mit einem einen Stromregler (51, 52) aufweisenden innenliegenden Stromregelkreis, dem ein äußerer Drehzahlregelkreis überlagert ist, ausgebildet ist, aufweisend Erzeugen eines Ansteuersignals für das Stellglied durch Überlagern des vom Stromregler (52) erzeugten, der Versorgungspannung zugeordneten Signals mit einem der hochfrequenten Spannung zugeordneten Signal,
**dadurch gekennzeichnet, dass** dabei
die feldorientierte Regelung (43) eine diskrete feldorientierte Regelung ist und aufweisend Betreiben des Stromreglers (52) mit einer Reglerfrequenz, die insbesondere gleich der Frequenz der hochfrequenten Spannung ist, und/oder wobei die hochfrequente Spannung rechteckförmig ausgebildet ist,
- diskretes Messen der Längs- und Querströme zumindest während der Anlaufphase mit der doppelten Frequenz der Frequenz der hochfrequenten Spannung, wobei die Messungen derart getaktet sind, dass bei zwei hintereinander erfolgen Messungen eine der Messungen beim Maximum und die andere Messung beim Minimum der gemessenen Ströme erfolgen, und
- Ermitteln der hochfrequenten Stromanteile der Längs- und Querströme durch Differenzbilden der gemessenen entsprechenden Ströme zweier hintereinander folgender Messungen,
und während einer der Anlaufphase anschließenden Betriebsphase, drehzahlgeregeltes Betreiben des geregelten elektrischen Antriebs (40) mittels der feldorientierte Regelung (43) und in Abhängigkeit einer mittels der Längs- und Querströme und eines mathematischen Modells des Drehstromsynchronmotors (36) ermittelten Winkelposition des Rotors (38) relativ zum Stator (37).

2. Verfahren nach Anspruch 1, aufweisend Betreiben des als Umrichter (41) ausgebildeten Stellglieds mittels Pulsweitenmodulation, und/oder aufweisend Betreiben des Stellglieds ohne der überlagerten hochfrequenten Spannung während der Betriebsphase.

3. Verfahren nach Anspruch 1 oder 2, wobei die feldorientierte Regelung (43) nach dem maximum torque per ampere Prinzip ausgelegt ist.

4. Verfahren nach einem der Ansprüche 1 bis 3, wobei die Komponente ein Verdichter (21, 102) ist, der eine Verdichterkammer (31) umfasst und zum Verdichten eines Fluids vorgesehen ist.

5. Verfahren nach Anspruch 4, wobei die Verdichterkammer (31) einen Einlass (32) und einen Auslass (33), einen innerhalb der Verdichterkammer (31) verschieblich gelagerten Kolben (34) und eine Kurbelwelle (35) umfasst, und der Rotor (38) des Drehstromsynchronmotors (36) über die Kurbelwelle (35) mit dem Kolben (34) gekoppelt ist, sodass im Betrieb des Verdichters (21) der Kolben (34) mittels des Drehstromsynchronmotors (36) ein von der Verdichterkammer (31) und dem Kolben (34) eingeschlossenes Volumen (39) zum Verdichten eines Fluids zu verkleinern vermag, wobei in einer bestimmten Position des Kolbens (34) relativ zur Verdichterkammer (31) das Volumen (39) minimal und in einer weiteren bestimmten Position des Kolbens (34) relativ zur Verdichterkammer (31) das Volumen (39) maximal ist, aufweisend Ansteuern des Stellglieds zu Beginn der Anlaufphase derart, dass dieser vor dem drehzahlgeregelten Anfahren den Kolben (34) weg von der bestimmten Position bewegt.

6. Verfahren nach Anspruch 4 oder 5, wobei das Haushaltsgerät ein Haushaltskältegerät (1) ist, das einen wärmeisolierten Korpus (10) mit einem kühlbaren Innenbehälter (2), der einen zum Lagern von Lebensmitteln vorgesehenen kühlbaren Innenraum (3) begrenzt, einen zum Kühlen des kühlbaren Innenraums (3) vorgesehenen Kältemittelkreislauf (20) mit einem Kühlmittel als das Fluid und dem Verdichter (21), und den geregelten elektrischen Antrieb umfasst.

7. Verfahren nach Anspruch 4 oder 5, wobei das Haushaltsgerät als ein Haushaltswäschetrockner (101) ausgebildet ist, der einen den Verdichter (102) umfassenden Wärmepumpenkreislauf (102) und den geregelten elektrischen Antrieb (40) umfasst.

8. Haushaltsgerät, aufweisend eine Komponente (21, 102) und einen geregelten elektrischen Antrieb (40), der einen permanenterregten Drehstromsynchronmotor (36), ein insbesondere als Umrichter (41) ausgebildetes Stellglied zum Ansteuern des Drehstromsynchronmotors (36) und eine feldorientierte Regelung (43) zum Ansteuern des Stellglieds aufweist, wobei der Drehstromsynchronmotor (36) einen Stator (37) und einen bezüglich des Stators (37) drehbar gelagerten Rotor (38) umfasst und Teil der Komponente (21, 102) ist oder vorgesehen ist, diese Komponente (21, 102) anzutreiben, **dadurch gekennzeichnet, dass** das Haushaltsgerät (1, 101) ausgebildet ist, das Verfahren nach einem der Ansprüche 1 bis 7 durchzuführen und somit ausgebildet ist,
während einer Anlaufphase des elektrischen Antriebs (40),
- eine von dem Stellglied erzeugte und zum Betreiben des Drehstromsynchronmotors (36) vorgesehene Versorgungsspannung mit einer hochfrequenten Spannung zu überlagern, wodurch Strangströme des Drehstromsynchronmotors (36) entsprechende hochfrequente Stromanteile aufweisen,
- von dem Drehstromsynchronmotor (36) zugeordnete Längs- und Querströme aus den Strangströmen zu ermitteln, die der hochfrequenten Spannung entsprechende hochfrequente Stromanteile aufweisen,
- die Winkelposition des Rotors (38) relativ zum Stator (37) in Abhängigkeit der hochfrequenten Stromanteile der Längs- und Querströme zu ermitteln, und
- die Drehzahl des Drehstromsynchronmotors (36) durch drehzahlgeregeltes Betreiben des geregelten elektrischen Antriebs (40) mittels der feldorientierten Regelung (43) und in Abhängigkeit der mittels der hochfrequenten Stromanteile der Längs- und Querströme ermittelten Winkelposition des Rotors (38) relativ zum Stator (37) zu erhöhen, bis der Drehstromsynchronmotor (36) eine vorgegebene Grenzdrehzahl erreicht,
wobei die feldorientierte Regelung (43) eine Kaskadenstruktur mit einem einen Stromregler (51, 52) aufweisenden innenliegenden Stromregelkreis, dem ein äußerer Drehzahlregelkreis überlagert ist, ausgebildet ist, aufweisend Erzeugen eines Ansteuersignals für das Stellglied durch Überlagern des vom Stromregler (52) erzeugten, der Versorgungspannung zugeordneten Signals mit einem der hochfrequenten Spannung zugeordneten Signal,
wobei die feldorientierte Regelung (43) eine diskrete feldorientierte Regelung ist und aufweisend Betreiben des Stromreglers (52) mit einer Reglerfrequenz, die insbesondere gleich der Frequenz der hochfrequenten Spannung ist, und/oder wobei die hochfrequente Spannung rechteckförmig ausgebildet ist,
- diskretes Messen der Längs- und Querströme zumindest während der Anlaufphase mit der doppelten Frequenz der Frequenz der hochfrequenten Spannung, wobei die Messungen derart getaktet sind, dass bei zwei hintereinander erfolgen Messungen eine der Messungen beim Maximum und die andere Messung beim Minimum der gemessenen Ströme erfolgen, und
- Ermitteln der hochfrequenten Stromanteile der Längs- und Querströme durch Differenzbilden der gemessenen entsprechenden Ströme zweier hintereinander folgender Messungen,
und während einer der Anlaufphase anschließenden Betriebsphase, den geregelten elektrischen Antrieb (40) mittels der feldorientierte Regelung (43) und in Abhängigkeit einer mittels der Längs- und Querströme und eines mathematischen Modells des Drehstromsynchronmotors (36) ermittelten aktuellen Winkelposition des Rotors (38) relativ zum Stator (37) drehzahlgeregelt zu betreiben.

9. Haushaltsgerät nach Anspruch 8, **dadurch gekennzeichnet, dass** die feldorientierte Regelung (43) eine Kaskadenstruktur mit einem einen Stromregler (51, 52) aufweisenden innenliegenden Stromregelkreis, dem ein äußerer Drehzahlregelkreis überlagert ist, ausgebildet ist, und insbesondere dass die feldorientierte Regelung eine diskrete feldorientierte Regelung (43) ist.

10. Haushaltsgerät nach Anspruch 8 oder 9, **dadurch gekennzeichnet, dass** die Komponente ein Verdichter (21, 102) ist, der eine Verdichterkammer (31) umfasst und zum Verdichten eines Fluids vorgesehen ist, wobei die Verdichterkammer (31) einen Einlass (32) und einen Auslass (33), einen innerhalb der Verdichterkammer (31) verschieblich gelagerten Kolben (34) und eine Kurbelwelle (35) umfasst, und der Rotor (38) des Drehstromsynchronmotors (36) über die Kurbelwelle (35) mit dem Kolben (34) gekoppelt ist, sodass im Betrieb des Verdichters (21) der Kolben (34) mittels des Drehstromsynchronmotors (36) ein von der Verdichterkammer (31) und dem Kolben (34) eingeschlossenes Volumen (39) zum Verdichten eines Fluids zu verkleinern vermag, wobei in einer bestimmten Position des Kolbens (34) relativ zur Verdichterkammer (31) das Volumen (39) minimal und in einer weiteren bestimmten Position des Kolbens (34) relativ zur Verdichterkammer (31) das Volumen (39) maximal ist,

11. Haushaltsgerät nach Anspruch 10, **dadurch gekennzeichnet, dass** es ein Haushaltskältegerät (1) ist, das einen wärmeisolierten Korpus (10) mit einem kühlbaren Innenbehälter (2), der einen zum Lagern von Lebensmitteln vorgesehenen kühlbaren Innenraum (3) begrenzt, einen zum Kühlen des kühlbaren Innenraums (3) vorgesehenen Kältemittelkreislauf (20) mit einem Kühlmittel als das Fluid und dem Verdichter (21), und den geregelten elektrischen Antrieb (40) umfasst.

12. Haushaltsgerät nach Anspruch 10, **dadurch gekennzeichnet, dass** es ein Haushaltswäschetrockner (101) ist, der einen den Verdichter (102) umfassenden Wärmepumpenkreislauf (103) und den geregelten elektrischen Antrieb (40) umfasst.

## Claims

1. Method for operating a household appliance (1, 101), which has a component (21, 102) and a regulated electrical drive (40), which has a permanently excited three-phase synchronous motor (36), an actuating element in particular embodied as a converter (41) for actuating the three-phase synchronous motor (36) and a field-oriented control (43) for actuating the actuating element, wherein the three-phase synchronous motor (36) comprises a stator (37) and a rotor (38), which is mounted such that it can rotate relative to the stator (37), and is part of the component (21, 102) or is provided to drive said component (21, 102), having the following method steps:
during a start-up phase of the electrical drive (40),
- superimposing a supply voltage generated by the actuating element and provided for operating the three-phase synchronous motor (36) with a high-frequency voltage, whereby string currents of the three-phase synchronous motor (36) have corresponding high-frequency current components,
- ascertaining longitudinal and transverse currents, which are assigned to the three-phase synchronous motor (36), from the string currents that have high-frequency current components corresponding to the high-frequency voltage,
- ascertaining the angular position of the rotor (38) relative to the stator (37) as a function of the high-frequency current components of the longitudinal and transverse currents, and
- increasing the rotational speed of the three-phase synchronous motor (36) by operating the regulated electrical drive (40) in a rotational-speed-regulated manner by means of the field-oriented control (43) and as a function of the angular position, ascertained by means of the high-frequency current components of the longitudinal and transverse currents, of the rotor (38) relative to the stator (37) until the three-phase synchronous motor (36) reaches a predefined limit rotational speed, wherein the field-oriented control (43) is embodied as a cascade structure with an inner-lying current regulation circuit having a current regulator (51, 52), to which an outer rotational speed regulation circuit is superimposed, having the generation of an actuation signal for the actuation element by superimposing the signal, which is generated by the current regulator (52) and assigned to the supply voltage, with a signal assigned to the high-frequency voltage,
**characterised in that** in this context the field-oriented control (43) is a discrete field-oriented control and having operation of the current regulator (52) at a regulator frequency, which in particular is equal to the frequency of the high-frequency voltage, and/or wherein the high-frequency voltage is embodied in a rectangular manner,
- discretely measuring the longitudinal and transverse currents at least during the start-up phase at twice the frequency of the frequency of the high-frequency voltage, wherein the measurements are timed in such a manner that, in the event of two measurements taking place in succession, one of the measurements takes place at the maximum and the other measurement takes place at the minimum of the measured currents, and
- ascertaining the high-frequency current components of the longitudinal and transverse currents by forming the difference between the measured corresponding currents of two measurements taking place in succession,
and during an operating phase following the start-up phase, operating the regulated electrical drive (40) in a rotational-speed-regulated manner by means of the field-oriented control (43) and as a function of an angular position, ascertained by means of the longitudinal and transverse currents and a mathematical model of the three-phase synchronous motor (36), of the rotor (38) relative to the stator (37).

2. Method according to claim 1, having operation of the actuating element embodied as a converter (41) by means of pulse width modulation, and/or having operation of the actuating element without the superimposed high-frequency voltage during the operating phase.

3. Method according to claim 1 or 2, wherein the field-oriented control (43) is designed according to the maximum torque per ampere principle.

4. Method according to one of claims 1 to 3, wherein the component is a compressor (21, 102), which comprises a compressor chamber (31) and is provided for compressing a fluid.

5. Method according to claim 4, wherein the compressor chamber (31) comprises an inlet (32) and an outlet (33), a piston (34), which is mounted such that it can be displaced within the compressor chamber (31), and a crankshaft (35), and the rotor (38) of the three-phase synchronous motor (36) is coupled to the piston (34) via the crankshaft (35), so that during operation of the compressor (21), by means of the three-phase synchronous motor (36), the piston (34) is able to reduce a volume (39) included by the compressor chamber (31) and the piston (34) for compressing a fluid, wherein in a particular position of the piston (34) relative to the compressor chamber (31) the volume (39) is at a minimum and in a further particular position of the piston (34) relative to the compressor chamber (31) the volume is at a maximum, having actuation of the actuating element at the start of the start-up phase in such a manner that it is moved away from the particular position before the piston (34) is started in a rotational-speed-regulated manner.

6. Method according to claim 4 or 5, wherein the household appliance is a household refrigeration appliance (1), which comprises a thermally insulated carcass (10) with a coolable inner container (2), which delimits a coolable inner compartment (3) provided for the storage of foodstuffs, a coolant circuit (20) provided for cooling the coolable inner compartment (3) with a coolant as the fluid and the compressor (21), and the regulated electrical drive.

7. Method according to claim 4 or 5, wherein the household appliance is embodied as a household tumble dryer (101), which comprises a heat pump circuit (102), which comprises the compressor (102), and the regulated electrical drive (40).

8. Household appliance, having a component (21, 102) and a regulated electrical drive (40), which has a permanently excited three-phase synchronous motor (36), an actuating element in particular embodied as a converter (41) for actuating the three-phase synchronous motor (36) and a field-oriented control (43) for actuating the actuating element, wherein the three-phase synchronous motor (36) comprises a stator (37) and a rotor (38), which is mounted such that it can rotate relative to the stator (37) and is part of the component (21, 102) or is provided to drive said component (21, 102), **characterised in that** the household appliance (1, 101) is embodied to perform the method according to one of claims 1 to 7 and is therefore embodied,
during a start-up phase of the electrical drive (40),
- to superimpose a supply voltage generated by the actuating element and provided for operating the three-phase synchronous motor (36) with a high-frequency voltage, whereby string currents of the three-phase synchronous motor (36) have corresponding high-frequency current components,
- to ascertain longitudinal and transverse currents, which are assigned to the three-phase synchronous motor (36), from the string currents that have high-frequency current components corresponding to the high-frequency voltage,
- to ascertain the angular position of the rotor (38) relative to the stator (37) as a function of the high-frequency current components of the longitudinal and transverse currents, and
- to increase the rotational speed of the three-phase synchronous motor (36) by operating the regulated electrical drive (40) in a rotational-speed-regulated manner by means of the field-oriented control (43) and as a function of the angular position, ascertained by means of the high-frequency current components of the longitudinal and transverse currents, of the rotor (38) relative to the stator (37) until the three-phase synchronous motor (36) reaches a predefined limit rotational speed,
wherein the field-oriented control (43) is embodied as a cascade structure with an inner-lying current regulation circuit having a current regulator (51, 52), to which an outer rotational speed regulation circuit is superimposed, having the generation of an actuation signal for the actuation element by superimposing the signal, which is generated by the current regulator (52) and assigned to the supply voltage, with a signal assigned to the high-frequency voltage,
wherein the field-oriented control (43) is a discrete field-oriented control and having operation of the current regulator (52) at a regulator frequency, which in particular is equal to the frequency of the high-frequency voltage, and/or wherein the high-frequency voltage is embodied in a rectangular manner,
- discretely measuring the longitudinal and transverse currents at least during the start-up phase at twice the frequency of the frequency of the high-frequency voltage, wherein the measurements are timed in such a manner that, in the event of two measurements taking place in succession, one of the measurements takes place at the maximum and the other measurement takes place at the minimum of the measured currents, and
- ascertaining the high-frequency current components of the longitudinal and transverse currents by forming the difference between the measured corresponding currents of two measurements taking place in succession,
and during an operating phase following the start-up phase, to operate the regulated electrical drive (40) in a rotational-speed-regulated manner by means of the field-oriented control (43) and as a function of a current angular position, ascertained by means of the longitudinal and transverse currents and a mathematical model of the three-phase synchronous motor (36), of the rotor (38) relative to the stator (37).

9. Household appliance according to claim 8, **characterised in that** the field-oriented control (43) is a cascade structure with an inner-lying current regulation circuit having a current regulator (51, 52), to which an outer rotational speed regulation circuit is superimposed, and in particular that the field-oriented control is a discrete field-oriented control (43).

10. Household appliance according to claim 8 or 9, **characterised in that** the component is a compressor (21, 102), which comprises a compressor chamber (31) and is provided for compressing a fluid, wherein the compressor (31) comprises an inlet (32) and an outlet (33), a piston (34), which is mounted such that it can be displaced within the compressor chamber (31), and a crankshaft (35), and the rotor (38) of the three-phase synchronous motor (36) is coupled to the piston (34) via the crankshaft (35), so that during operation of the compressor (21), by means of the three-phase synchronous motor (36), the piston (34) is able to reduce a volume (39) included by the compressor chamber (31) and the piston (34) for compressing a fluid, wherein in a particular position of the piston (34) relative to the compressor chamber (31) the volume (39) is at a minimum and in a further particular position of the piston (34) relative to the compressor chamber (31) the volume is at a maximum.

11. Household appliance according to claim 10, **characterised in that** it is a household refrigeration appliance (1), which comprises a thermally insulated carcass (10) with a coolable inner container (2), which delimits a coolable inner compartment (3) provided for the storage of foodstuffs, a coolant circuit (20) provided for cooling the coolable inner compartment (3) with a coolant as the fluid and the compressor (21), and the regulated electrical drive (40).

12. Household appliance according to claim 10, **characterised in that** it is a household tumble dryer (101), which comprises a heat pump circuit (103), which comprises the compressor (102), and the regulated electrical drive (40).

## Revendications

1. Procédé pour faire fonctionner un appareil électroménager (1, 101), lequel comporte un composant (21, 102) et un entraînement électrique (40) régulé, lequel entraînement possède un moteur synchrone triphasé (36) à excitation permanente, un actionneur conçu en particulier comme un convertisseur (41) pour commander le moteur synchrone triphasé (36) et une commande orientée champ (43) pour commander l'actionneur, dans lequel le moteur synchrone triphasé (36) comprend un stator (37) et un rotor (38) monté de manière rotative par rapport au stator (37) et fait partie du composant (21, 102) ou est destiné à entraîner ce composant (21, 102), comprenant les étapes de procédé suivantes :
pendant une phase de démarrage de l'entraînement électrique (40),
- la superposition d'une tension d'alimentation générée par l'actionneur et destinée au fonctionnement du moteur synchrone triphasé (36) à une tension haute fréquence, moyennant quoi les courants de phase du moteur synchrone triphasé (36) présentent des composantes de courant haute fréquence correspondantes,
- la détermination des courants longitudinaux et transversaux attribués au moteur synchrone triphasé (36) à partir des courants de phase qui présentent des composantes de courant haute fréquence correspondant à la tension haute fréquence,
- la détermination de la position angulaire du rotor (38) par rapport au stator (37) en fonction des composantes de courant haute fréquence des courants longitudinaux et transversaux, et
- l'augmentation de la vitesse du moteur synchrone triphasé (36) par le fonctionnement régulé en vitesse de l'entraînement électrique (40) régulé au moyen de la commande orientée champ (43) et en fonction de la position angulaire du rotor (38) par rapport au stator (37), déterminée en fonction des composantes de courant haute fréquence des courants longitudinaux et transversaux, jusqu'à ce que le moteur synchrone triphasé (36) atteigne une vitesse limite prédéterminée,
dans lequel la commande orientée champ (43) est conçue comme une structure en cascade avec un circuit de commande de courant interne présentant un régulateur de courant (51, 52) sur lequel est superposé un circuit de commande de vitesse externe, présentant la génération d'un signal de commande pour l'actionneur par superposition du signal généré par le régulateur de courant (52), affecté à la tension d'alimentation avec un signal affecté à la tension haute fréquence,
**caractérisé en ce que**
la commande orientée champ (43) est une commande orientée champ discrète et présentant le fonctionnement du régulateur de courant (52) avec une fréquence de régulateur qui est en particulier égale à la fréquence de la tension haute fréquence, et/ou dans lequel la tension haute fréquence est de forme rectangulaire,
- la mesure discrète des courants longitudinaux et transversaux au moins pendant la phase de démarrage avec une fréquence double de la fréquence de la tension haute fréquence, dans lequel les mesures sont cadencées de sorte que, lorsque deux mesures sont effectuées successivement, l'une des mesures a lieu au maximum et l'autre mesure a lieu au minimum des courants mesurés, et
- la détermination de composantes de courant haute fréquence des courants longitudinaux et transversaux par la formation de la différence entre les courants mesurés correspondants de deux mesures consécutives,
et pendant une phase de fonctionnement suivant la phase de démarrage, le fonctionnement régulé en vitesse de l'entraînement électrique (40) régulé au moyen de la commande orientée champ (43) et en fonction d'une position angulaire du rotor (38) déterminée au moyen des courants longitudinaux et transversaux et d'un modèle mathématique du moteur synchrone triphasé (36) par rapport au stator (37).

2. Procédé selon la revendication 1, présentant le fonctionnement de l'actionneur conçu comme convertisseur (41) au moyen d'une modulation de largeur d'impulsion et/ou présentant le fonctionnement de l'actionneur sans la tension haute fréquence superposée pendant la phase de fonctionnement.

3. Procédé selon la revendication 1 ou 2, dans lequel la commande orientée champ (43) est conçue selon le principe du couple maximal par ampère.

4. Procédé selon l'une des revendications 1 à 3, dans lequel le composant est un compresseur (21, 102) qui comprend une chambre de compresseur (31) et est destiné à la compression d'un fluide.

5. Procédé selon la revendication 4, dans lequel la chambre de compresseur (31) comprend une entrée (32) et une sortie (33), un piston (34) monté de manière mobile à l'intérieur de la chambre de compresseur (31) et un vilebrequin (35), et le rotor (38) du moteur synchrone triphasé (36) est couplé au piston (34) par l'intermédiaire du vilebrequin (35) de sorte que, lorsque le compresseur (21) est en fonctionnement, le piston (34) peut utiliser le moteur synchrone triphasé (36) pour réduire un volume (39) entouré par la chambre de compresseur (31) et le piston (34) afin de comprimer un fluide, dans lequel le volume (39) est minimal dans une position spécifique du piston (34) par rapport à la chambre de compresseur (31) et le volume (39) est maximal dans une autre position spécifique du piston (34) par rapport à la chambre de compresseur (31), présentant l'activation de l'actionneur au début de la phase de démarrage de manière à éloigner le piston (34) de la position spécifique avant le démarrage à vitesse régulée.

6. Procédé selon la revendication 4 ou 5, dans lequel l'appareil électroménager est un appareil de réfrigération domestique (1) qui comprend un corps calorifugé (10) avec un récipient intérieur pouvant être refroidi (2), qui délimite un intérieur pouvant être refroidi (3) destiné au stockage des aliments, un circuit réfrigérant (20) destiné au refroidissement de l'intérieur pouvant être refroidi (3) avec un liquide de refroidissement comme fluide et le compresseur (21), et l'entraînement électrique régulé.

7. Procédé selon la revendication 4 ou 5, dans lequel l'appareil électroménager est conçu comme un sèche-linge domestique (101) qui comprend un circuit de pompe à chaleur (102) comprenant le compresseur (102) et l'entraînement électrique (40) régulé.

8. Appareil électroménager présentant un composant (21, 102) et un entraînement électrique (40) régulé, qui présente un moteur synchrone triphasé (36) excité en permanence, un actionneur conçu en particulier comme convertisseur (41) pour commander le moteur synchrone triphasé (36) et une commande orientée champ (43) pour commander l'actionneur, dans lequel le moteur synchrone triphasé (36) comprend un stator (37) et un rotor (38) monté de manière rotative par rapport au stator (37) et fait partie du composant (21, 102) ou est destiné à entraîner ce composant (21, 102), **caractérisé en ce que** l'appareil électroménager (1, 101) est conçu pour mettre en oeuvre le procédé selon l'une des revendications 1 à 7 et est donc conçu,
pendant une phase de démarrage de l'entraînement électrique (40),
- pour superposer une tension haute fréquence à une tension d'alimentation générée par l'actionneur et destinée au fonctionnement du moteur synchrone triphasé (36), moyennant quoi les courants de phase du moteur synchrone triphasé (36) présentent des composantes de courant haute fréquence correspondantes,
- pour déterminer les courants longitudinaux et transversaux attribués au moteur synchrone triphasé (36) à partir des courants de phase qui présentent des composantes de courant haute fréquence correspondant à la tension haute fréquence,
- pour déterminer la position angulaire du rotor (38) par rapport au stator (37) en fonction des composantes de courant haute fréquence des courants longitudinaux et transversaux, et
- pour augmenter la vitesse du moteur synchrone triphasé (36) par le fonctionnement régulé en vitesse de l'entraînement électrique (40) régulé au moyen de la commande orientée champ (43) et en fonction de la position angulaire du rotor (38) par rapport au stator (37), déterminée en fonction des composantes de courant haute fréquence des courants longitudinaux et transversaux, jusqu'à ce que le moteur synchrone triphasé (36) atteigne une vitesse limite prédéterminée,
dans lequel la commande orientée champ (43) est conçue comme une structure en cascade avec un circuit de commande de courant interne présentant un régulateur de courant (51, 52) sur lequel est superposé un circuit de commande de vitesse externe, présentant la génération d'un signal de commande pour l'actionneur par superposition du signal généré par le régulateur de courant (52), affecté à la tension d'alimentation avec un signal affecté à la tension haute fréquence,
dans lequel la commande orientée champ (43) est une commande orientée champ discrète et comprenant le fonctionnement du régulateur de courant (52) avec une fréquence de régulateur qui est en particulier égale à la fréquence de la tension haute fréquence, et/ou dans lequel la tension haute fréquence est de forme rectangulaire,
- la mesure discrète des courants longitudinaux et transversaux au moins pendant la phase de démarrage avec une fréquence double de la fréquence de la tension haute fréquence, dans lequel les mesures sont cadencées de sorte que, lorsque deux mesures sont effectuées successivement, l'une des mesures a lieu au maximum et l'autre mesure a lieu au minimum des courants mesurés, et
- la détermination des composantes de courant haute fréquence des courants longitudinaux et transversaux par la formation de la différence entre les courants mesurés correspondants de deux mesures consécutives,
et pendant une phase de fonctionnement suivant la phase de démarrage, activer de manière régulée en vitesse l'entraînement électrique (40) régulé au moyen de la commande orientée champ (43) et en fonction d'une position angulaire actuelle du rotor (38) déterminée au moyen des courants longitudinaux et transversaux et d'un modèle mathématique du moteur synchrone triphasé (36) par rapport au stator (37).

9. Appareil électroménager selon la revendication 8, **caractérisé en ce que** la commande orientée champ (43) est conçue comme une structure en cascade avec une boucle de régulation de courant interne présentant un régulateur de courant (51, 52) sur lequel est superposée une boucle de régulation de vitesse externe, et en particulier, **en ce que** la commande orientée champ est une commande orientée champ (43) discrète.

10. Appareil électroménager selon la revendication 8 ou 9, **caractérisé en ce que** le composant est un compresseur (21, 102) qui comprend une chambre de compresseur (31) et est destiné à comprimer un fluide, dans lequel la chambre de compresseur (31) comprend une entrée (32) et une sortie (33), un piston (34) monté de manière mobile à l'intérieur de la chambre de compresseur (31) et un vilebrequin (35), et le rotor (38) du moteur synchrone triphasé (36) est couplé au piston (34) par l'intermédiaire du vilebrequin (35) de sorte que, lorsque le compresseur (21) est en fonctionnement, le piston (34) peut utiliser le moteur synchrone triphasé (36) pour réduire un volume (39) entouré par la chambre de compresseur (31) et le piston (34) afin de comprimer un fluide, dans lequel le volume (39) est minimal dans une position spécifique du piston (34) par rapport à la chambre de compresseur (31) et le volume (39) est maximal dans une autre position spécifique du piston (34) par rapport à la chambre de compresseur (31).

11. Appareil électroménager selon la revendication 10, **caractérisé en ce qu'**il s'agit d'un appareil de réfrigération domestique (1) qui comprend un corps calorifugé (10) avec un récipient intérieur pouvant être refroidi (2), qui délimite un intérieur pouvant être refroidi (3) destiné au stockage des aliments, un circuit réfrigérant (20) destiné au refroidissement de l'intérieur pouvant être refroidi (3) avec un liquide de refroidissement comme fluide et le compresseur (21), et l'entraînement électrique (40) régulé.

12. Appareil électroménager selon la revendication 10, **caractérisé en ce qu'**il s'agit d'un sèche-linge domestique (101) qui comprend un circuit de pompe à chaleur (103) comprenant le compresseur (102) et l'entraînement électrique (40) régulé.
